# EUROPÄISCHE PATENTSCHRIFT

(11) **EP 0 485 695 B1**
(45) Veröffentlichungstag und Bekanntmachung des Hinweises auf die Patenterteilung: **20.07.1994**
(21) Anmeldenummer: 91113536.6
(22) Anmeldetag: 13.08.1991
(51) Int. Cl.: G01D 5/26

(54) **Drehbarer optoelektrischer Messabgriff**
Rotatable optoelectric measuring instrument
Instrument mesureur rotatif opto-électrique

(30) Priorität: 03.11.1990 DE 4034980
(43) Veröffentlichungstag der Anmeldung: 20.05.1992
(73) Patentinhaber: Daimler-Benz Aerospace Aktiengesellschaft, 81663 München (DE)
(72) Erfinder: Krieger, Dietmar, W-8011 Zorneding (DE)

(56) Entgegenhaltungen:
- DE-A- 3 439 905
- DE-C- 3 517 825

## Beschreibung

Die Erfindung betrifft einen drehbaren optoelektrischer Meßabgriff einem Meßwertgebern, der in einer um eine Achse drehbaren Halterung beweglich angeordnet ist, wobei die Auslenkung des Meßwertgebers aus einer Anfangsposition als Meßwert erfaßt wird.

Drehbare optoelektrische Meßabgriffe unter Verwendung von Lichtwellenleitern sind an sich bekannt (z.B. DE 34 20 154 A1) und auch unter dem Stichwort "optischer Schleifring" geläufig. Derartige Einrichtungen eignen sich jedoch lediglich zur Übertragung von Signalen von einem beweglichen zu einem festen Geräteteil. Ist jedoch das bewegliche Geräteteil, von dem Signale zu übertragen sind,in einer weiteren, gegenüber einem festen Gehäuseteil ebenfalls beweglichen Halterung angeordnet, so müßte eine weitere separate Übertragungsstrecke vorgesehen werden.

Es ist daher Aufgabe der Erfindung, einen drehbaren optoelektrischen Meßabgriff für einen Meßwertgeber zu schaffen, der in einer um eine Achse drehbaren Halterung beweglich angeordnet ist, mit welchem bei geringem technischen Aufwand die Auslenkung des Meßwertgebers aus einer Anfangsposition berührungslos erfaßt und weitergeleitet wird. Der Meßabgriff soll insbesondere zur Erfassung der Auslenkung eines Innenrahmens eines kardanisch aufgehängten Kreisels geeignet sein. Diese Aufgabe erfüllt ein nach den kennzeichnenden Merkmalen des Patentanspruchs 1 ausgebildeter drehbarer optoelektrischer Meßabgriff.

Die Erfindung wird im folgenden anhand eines in den Figuren teilweise schematisch dargestellten Ausführungsbeispieles näher beschrieben. Es zeigen:
- Fig. 1: einen optoelektrischen Meßabgriff für den Innenrahmen eines kardanisch aufgehängten Kreisels;
- Fig. 2a: einen Querschnitt durch den Lichtwellenleiter für die optische Verbindung zwischen dem Innenrahmen des Kreisels und einem optoelektrischen Bauteil;
- Fig. 2b: eine Aufsicht auf die Stirnflächen des Lichtwellenleiters gemäß Fig. 2a;
- Fig. 3: eine Aufsicht auf das optoelektrische Bauteil mit den Sende- und Empfangsflächen und
- Fig. 4: eine Aufsicht auf eine zweiteilige, codierte Skala.

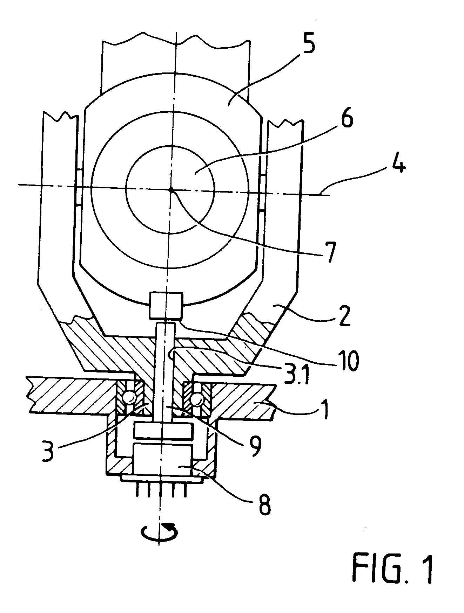

Bei dem in Fig. 1 dargestellten Ausführungsbeispiel ist in einem Gehäuseteil 1 der Außenrahmen 2 eines Kreisels um eine Achse 3 drehbar gelagert. Der Außenrahmen 2 bildet die Halterung für einen um eine Achse 4 drehbaren Innenrahmen 5, der wiederum den Kreiselrotor 6 trägt. Die Rotorachse 7, die Drehachse 4 des Innenrahmens 5 sowie die Drehachse 3 des Außenrahmens 2 stehen jeweils senkrecht aufeinander. Die Drehachse 3 ist im Gehäuse 1 bei Flugkörpern so ausgerichtet, daß sie gleichzeitig die Rollachse darstellt. Gierbewegungen des Flugkörpers führen dann zu einem Schwenk des Innenrahmens 5, dessen Auslenkung erfaßt und berührungsfrei zu einem optoelektrischen Bauteil 8, welches fest mit dem Gehäuse 1 verbunden ist, geleitet wird.

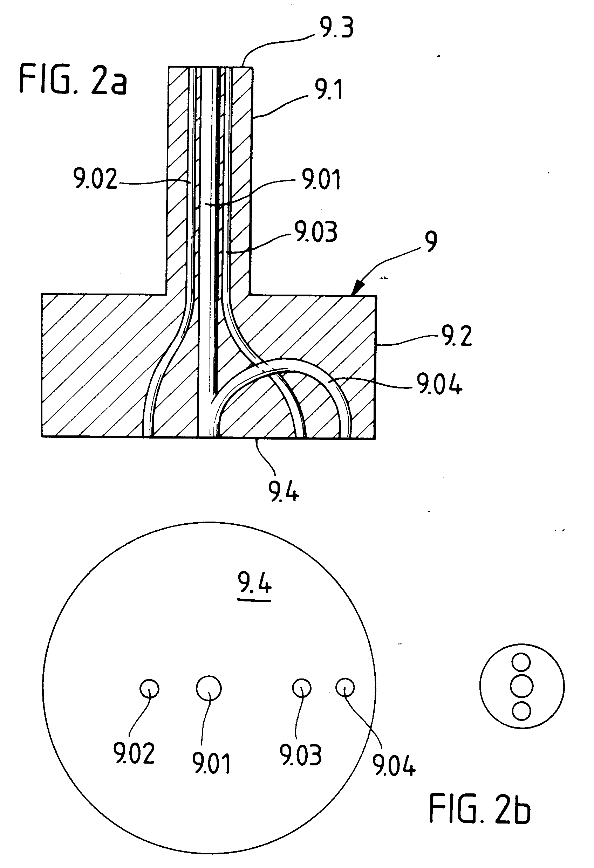

Hierzu ist nun in einer Bohrung 3.1, die koaxial zur Drehachse 3 verläuft, ein Lichtleiter 9 angeordnet, der in den Figuren 2a und b näher dargestellt ist. Der Lichtleiter 9 besteht aus einem zylindrischen ersten Teil 9.1, dessen Außendurchmesser dem Innendurchmesser der Bohrung 3.1 entspricht und einem zweiten zylindrischen Teil 9.2, dessen Außendurchmesser in etwa demjenigen des optoelektrischen Bauteiles 8 entspricht. Im Inneren des Lichtleiters 9 ist eine erste Lichtleitfaser 9.01 angeordnet, die exakt mittig, längs der Symmetrieachse angeordnet ist und dessen Enden in den Stirnflächen 9.3 und 9.4 des Lichtleiters 9 münden. Auf beiden Seiten der Lichtleitfaser 9.01, also neben der Symmetrieachse verlaufen zwei weitere Lichtleitfasern 9.02 und 9.03, die in der Stirnfläche 9.3 möglichst nahe zur ersten Lichtleitfaser 9.01 münden (siehe rechtes Bild von Fig. 2b) und im Bereich der Stirnfläche 9.4 in größeren, unterschiedlichen Abständen von der zentralen Lichtleitfaser 9.01 austreten (siehe linkes Bild von Fig. 2b). Weiterhin ist eine vierte Lichtleitfaser 9.04 vorgesehen, die in der Nähe der Stirnfläche 9.04 mit der zentralen Lichtleitfaser 9.01 gekoppelt ist und in einem noch weiteren Abstand als die Lichtleitfaser 9.03 in die Stirnfläche 9.4 mündet (siehe linkes Bild von Fig. 2b).

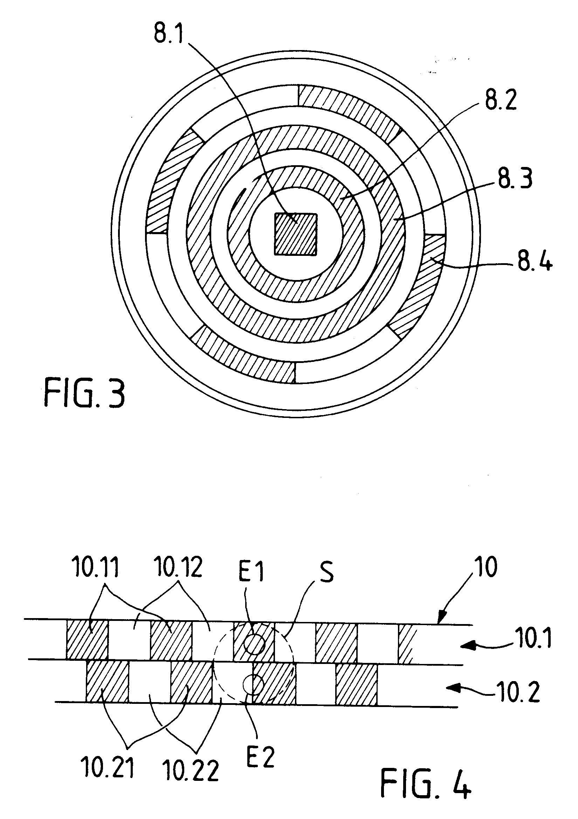

Die Funktion des Lichtleiters 9 läßt sich nun im Zusammenhang mit dem Aufbau des optoelektrischen Bauteiles 8, von welchem eine Aufsicht in Fig. 3 dargestellt ist, erklären:

Der ersten Lichtleitfaser 9.01 ist hier eine zentral angeordnete Lichtquelle 8.1, z.B. eine Leuchtdiode, zugeordnet. Das Licht der Leuchtdiode 8.1 wird über die Lichtleitfaser 9.01 auf eine Skala 10 gerichtet, welche in Fig. 4 dargestellt und später näher erläutert wird. Das von der Skala 10 reflektierte Licht gelangt über die beiden Lichtleitfasern 9.02 und 9.03 auf unterschiedliche Detektoren 8.2 und 8.3 des optoelektrischen Bauteiles 8 mit ringförmigen Empfangsflächen . Über die Lichtleitfaser 9.04 wird ein Teil des in der zentralen Faser 9.01 geführten Lichtes auf einen weiteren Detektor 8.4 mit ringförmiger, in aktive und nicht aktive Segmente unterteilter Empfangsfläche gelenkt.

Eine Drehung der Halterung 2 um die Achse 3 läßt die über die Lichtleitfasern 9.2 und 9.3 geführten Signale unverändert auf die Empfangsflächen 8.2 und 8.3 treffen. Hingegen wird die Winkellage der Halterung 2 bzgl. des Gehäuses 1 durch die segmentierte Ringfläche 8.4 registriert, wobei die Auflösung dieser Winkellage durch die Anzahl der Segmente bestimmt wird.

Bei Auslenkung des Rahmens 5 wandert jedoch die Skala 10 vor der Stirnfläche 9.3 des Lichtleiters 9 vorbei, was zu unterschiedlichen Modulationen des von den Skalenteilen 10.1 und 10.2 in die Lichtleitfasern 9.2 und 9.3 reflektierten Lichtes führt. Wie in Fig. 4 dargestellt ist, beleuchtet die zentrale Lichtleitfaser 9.01 die beiden Skalenteile 10.1 und 10.2 innerhalb einer kreisförmigen Fläche S aus. Der Skala 10.1 ist eine Empfangsfläche E1 der Lichtleitfaser 9.02 und der Skala 10.2 eine Empfangsfläche E2 der Lichtleitfaser 9.03 zugeordnet, die bzgl. der Skalenteile 10.1 und 10.2 nebeneinander auf gleicher Höhe angeordnet sind. Die beiden Skalenteile 10.1 und 10.2 weisen ein Muster aus abwechselnd absorbierenden und reflektierenden Flächen 10.11 bzw. 10.21 und 10.12 bzw. 10.22 auf, wobei die beiden Skalenteile 10.1 und 10.2 um die halbe Länge einer solchen Fläche gegeneinander versetzt angeordnet sind. Bei der Relativbewegung der Skala 10 gegenüber dem Lichtleiter 9 wird nun das über die Lichtleitfaser 9.02 und 9.03 auf das optoelektrische Bauteil 8 zurückgesandte Licht mit unterschiedlicher Phase moduliert. Das Maß der Auslenkung wird durch Impulszählung der auf der Empfangsfläche 8.2 erzeugten Signale und die Richtungserkennung der Auslenkung durch Phasenvergleich mit den Impulsen auf der Empfangsfläche 8.3 bewirkt.

Der erfindungsgemäße Meßabgriff ermöglicht also die Signalübertragung zwischen zwei, um unterschiedliche Achsen drehbaren Teilen. Analoge Anwendungen sind beispielsweise bei Werkzeugmaschinen denkbar.

## Patentansprüche

1. Drehbarer optoelektrischer Meßabgriff eines Meßwertgebers, der in einer um eine Achse drehbaren Halterung beweglich angeordnet ist, wobei die Auslenkung des Meßwertgebers aus einer Anfangsposition als Meßwert erfaßt wird, **dadurch gekennzeichnet**, daß der Meßwertgeber (5) auf einer der Drehachse (3) der Halterung (2) zugewandten Seite eine mit unterschiedlichen optischen Eigenschaften in Codeform versehene Skala (10) aufweist und, daß die Drehachse (3) der Halterung (2) eine axiale Bohrung (3.1) aufweist, in welcher ein Lichtleiter (9) angeordnet ist, dessen eines Ende (9.3) auf die Skala (10) und dessen anderes Ende (9.4) auf ein optoelektrisches Bauelement (8) gerichtet ist, wobei das optoelektrische Bauelement (8) mit einem die Drehachse (3) der Halterung (2) lagernden Gehäuseteil (1) fest verbunden ist.

2. Optoelektrischer Meßabgriff nach Anspruch 1 , **dadurch gekennzeichnet**, daß in der Bohrung (3.1) der Drehachse (3) der Halterung (2) eine koaxial verlaufende erste und eine exzentrisch verlaufende zweite Lichtleitfaser (9.01, 9.02) angeordnet sind und , daß die erste Lichtleitfaser (9.01) mit einer Lichtquelle (8.1) und die zweite Lichtleitfaser (9.02) mit einem photoempfindlichen Detektor (8.2) des optoelektrischen Bauelementes (8) optisch verbunden sind.

3. Optoelektrischer Meßabgriff nach Anspruch 1 oder 2, **gekennzeichnet**, durch mindestens einen photoempfindlichen Detektor (8.2, 8.3) mit einer ringförmigen, konzentrisch zur Drehachse (3) der Halterung (2) angeordneten Empfangsfläche , in deren Ringzentrum die Lichtquelle angeordnet ist.

4. Optoelektrischer Meßabgriff nach Anspruch 3, **gekennzeichnet**, durch mindestens einen weiteren Detektor (8.4) mit ringförmiger in aktive und nicht aktive Segmente unterteilter Empfangsfläche.

5. Optoelektrischer Meßabgriff nach einem der Ansprüche 1 bis 4, **dadurch gekennzeichnet**, daß in der Bohrung (3.1) der Drehachse (3) der Halterung (2) zwei zweite Lichtleitfasern (9.02, 9.03) in Bezug auf die erste Lichtleitfaser (9.01) gegenüberliegend angeordnet sind, die eine optische Verbindung zwischen zwei codierten Skalen (10.1, 10.2) auf dem Meßwertgeber (5) und zwei jeweils einer Skala (10.1, 10.2) zugeordneten Detektoren (8.2, 8.3) mit ringförmigen Empfangsflächen bilden.

6. Optoelektrischer Meßabgriff nach einem der Ansprüche 1 bis 5, **dadurch gekennzeichnet**, daß die in aktive und nicht aktive Segmente unterteilte ringförmige Empfangsfläche des Detektors (8.4) über eine Lichtleitfaser (9.04) direkt mit der zentralen ersten Lichtleitfaser (9.01) verbunden ist.

7. Optoelektrischer Meßabgriff nach einem der Ansprüche 1 bis 6, **dadurch gekennzeichnet**, daß die Skalen (10.1, 10.2) jeweils ein gleichmäßiges, lineares Muster aus reflektierenden (10.12; 10.22) und absorbierenden (10.11; 10.21) Flächenelementen aufweist, wobei die beiden Skalen (10.1, 10.2) um die halbe Länge eines Flächenelementes versetzt nebeneinander angeordnet sind.

## Claims

1. Rotary opto-electrical measuring pickoff of a data transmitter which is displaceably arranged in a holder which is rotatable around an axis, in which respect the deflection of the data transmitter from an initial position is taken as measuring data, **characterised in that** the data transmitter (5) comprises on a side which is oriented towards the rotary axis (3) of the holder (2) a dial (10) containing different encoded optical features, that the rotary axis (3) of the holder (2) has an axial bore (3.1) with a light conductor (9) arranged therein, the one end (9.3) of which is oriented towards the dial (10) and the other end (9.4) of which is oriented towards an opto-electrical assembly element (8), and that the opto-electrical assembly element (8) is firmly connected to a housing element (1) which bears the rotary axis (3) of the holder (2).

2. Opto-electrical measuring pickoff according to claim 1, **characterised in that** a coaxially extending first and an eccentrically extending second optical fibre (9.01, 9.02) is arranged in the bore (3.1) of the rotary axis (3) of the holder (2), and that the first optical fibre (9.01) is optically connected with a light source (8.1), and the second optical fibre (9.02) with a photo-sensitive detector (8.2) of the opto-electrical assembly element (8).

3. Opto-electrical measuring pickoff according to claim 1 or 2, **characterised by** at least one photo-sensitive detector (8.2, 8.3) with an annular receiving surface, which is arranged concentrally to the rotary axis (3) of the holder (2) with a light source in its annular centre.

4. Opto-electrical measuring pickoff according to claim 3, **characterised by** at least one additional detector (8.4) with an annular receiving surface which is divided into active and inactive segments.

5. Opto-electrical measuring pickoff according to one of claims 1 to 4, **characterised in that** the bore (3.1) of the rotary axis (3) of the holder (2) houses two secondary optical fibres (9.02, 9.03) opposite the first optical fibre (9.01) which establish an optical connection between two encoded dials (10,1, 10.2) on the data transmitter (5), and two detectors (8.2, 9.3) with annular receiving surfaces which are associated with a respective dial (10.1, 10.2).

6. Opto-electrical measuring pickoff according to one of claims 1 to 5, **characterised in that** the annular receiving surface of the detector (8.4), which is diviced into active and inactive segments, is directly connected by means of an optical fibre (9.04) to the central first optical fibre (9.01).

7. Opto-electrical measuring pickoff according to one of claims 1 to 6, **characterised in that** the dials (10.1, 10.2) comprise an even linear pattern of reflecting (10.12; 10.22) and absorbing (10.11; 10.21) surface elements, and that both dials (10.1, 10.2) are arranged transposed by half a length of a surface element next to each other.

## Revendications

1. Dispositif de détection opto-électronique rotatif pour un capteur de mesure qui est monté dans un support mobile en rotation autour d'un axe, l'écart du capteur de mesure par rapport à une position d'origine étant lu en tant que valeur de la mesure, caractérisé par le fait que le capteur de mesure (5) comporte sur une face tournée vers l'axe de rotation (3) du support (2) une échelle (10) avec des propriétés optiques variables sous une forme de codage et par le fait que l'axe de rotation (3) du support (2) comporte un alésage (3.1) axial à l'intérieur duquel est placée une fibre optique (9) dont l'une des extrémités (9.3) est dirigée sur l'échelle (10) et l'autre extrémité (9.4) est dirigée vers un composant (8) opto-électronique, le composant (8) opto-électronique étant lié rigidement à une partie formant boîtier (1) qui supporte l'axe de rotation (3) du support (2).

2. Dispositif de détection opto-électronique selon la revendication 1, caractérisé par le fait qu'une première fibre optique (9.01) coaxiale et une deuxième fibre optique (9.02) excentrique sont disposées à l'intérieur de l'alésage (3.1) de l'axe de rotation (3) du support (2) et par le fait que la première fibre optique (9.01) est couplée optiquement à une source lumineuse (8.1) et la deuxième fibre optique (9.02) est couplée optiquement à un photo-détecteur (8.2) du composant opto-électronique (8).

3. Dispositif de détection opto-électronique selon la revendication 1 ou 2, caractérisé par au moins un photo-détecteur (8.2, 8.3) comportant une surface réceptrice annulaire qui est disposée concentriquement à l'axe de rotation (3) du support (2) et au centre de laquelle est disposée la source lumineuse.

4. Dispositif de détection opto-électronique selon la revendication 3, caractérisé par au moins un détecteur (8.4) supplémentaire dont la surface réceptrice annulaire est divisée en segments actifs et en segments non actifs.

5. Dispositif de détection opto-électronique selon l'une des revendications 1 à 4, caractérisé par le fait que deux deuxièmes fibres optiques (9.02, 9.03) sont disposées à l'intérieur de l'alésage (3.1) de l'axe de rotation (3), en vis-à-vis par rapport à la première fibre optique (9.01), lesquelles fibres optiques forment une liaison optique entre deux échelles (10.1, 10.2) codées sur le capteur de mesure (5) et deux détecteurs (8.2, 8.3) à surfaces réceptrices annulaires qui sont associés chacun à une échelle (10.1, 10.2).

6. Dispositif de détection opto-électronique selon l'une des revendications 1 à 5, caractérisé par le fait que la surface réceptrice du détecteur (8.4) divisée en segments actifs et en segments non actifs est reliée directement à la première fibre (9.01) centrale par l'intermédiaire d'une fibre optique (9.04).

7. Dispositif de détection opto-électronique selon l'une des revendications 1 à 6, caractérisé par le fait que les échelles (10.1, 10.2) présentent chacune un motif linéaire régulier formé d'éléments de surface réfléchissants (10.12; 10.22) et d'éléments de surface absorbants (10.11; 10.21), les deux échelles (10.1, 10.2) étant disposées l'une à côté de l'autre avec un décalage qui correspond à la moitié de la longueur d'un élément de surface.
